# EUROPEAN PATENT SPECIFICATION

(11) **EP 3 347 328 B1**
(45) Date of publication and mention of the grant of the patent: **11.03.2020**
(21) Application number: 15903511.2
(22) Date of filing: 11.09.2015
(51) Int. Cl.: C04B 35/622, C04B 35/626, C04B 35/628, B01J 32/00, C04B 38/00

(54) **METHOD OF FORMING POROUS CERAMIC PARTICLES**
VERFAHREN ZUR FORMUNG PORÖSER KERAMIKPARTIKEL
PROCÉDÉ DE FORMATION DE PARTICULES EN CÉRAMIQUE POREUSE

(43) Date of publication of application: 18.07.2018
(73) Proprietor: Saint-Gobain Ceramics&Plastics, Inc., Worcester, MA 01615-0008 (US)
(72) Inventor: FRANCIS, Michael K., Hudson, Ohio 44236 (US); KOCH, Samuel M., Broadview Heights, Ohio 44147 (US); FOISE, Jonathan W., Hudson, Ohio 44236 (US); WOOLLEY, David E., Pittsburgh, Pennsylvania 15217 (US)
(74) Representative: Zimmermann & Partner Patentanwälte mbB
(86) International application number: PCT/IB2015/056995
(87) International publication number: WO 2017/042611

(56) References cited:
- US-A- 5 364 570
- US-A1- 2006 006 589
- US-A1- 2006 251 826
- US-A1- 2012 220 443
- US-A1- 2012 227 968

## Description

### FIELD OF THE DISCLOSURE

The present disclosure relates to a method of forming a plurality of porous ceramic particles. In particular, the disclosure relates to the use of a spray fluidization process in batch mode for forming porous ceramic particles.

### BACKGROUND

Porous ceramic particles may be used in a wide variety of applications and in particular are uniquely suited to serve, for example, in the catalytic field as a catalyst carrier or component of a catalyst carrier. Porous ceramic particles used in the catalytic field need to possess, for example, a combination of at least a minimum surface area on which a catalytic component may be deposited, high water absorption and high crush strength. Achieving a minimum surface area and high water absorption may be, at least partially, accomplished through incorporating a minimum amount of porosity in the ceramic particles used as the catalyst carrier or as the component of the catalyst carrier. However, an increase in the porosity of the ceramic particles may alter other properties, such as, the crush strength of the catalyst carrier or the component of the catalyst carrier. Conversely, high crush strength may require lower porosity, which then reduces surface area and water absorption of the catalyst carrier or component of the catalyst carrier. Therefore, balancing of these properties in the porous ceramic particles, particularly when the particles are used in the catalytic field, is integral to the performance of the component. Once a balance of the necessary properties in the porous ceramic particles is achieved, uniform production of the particles is required in order to guarantee uniform performance of the component. Accordingly, the industry continues to demand improved porous ceramic particles having various desired qualities, such as, a particular porosity and improved methods for uniformly forming these porous ceramic particles.

Document US 2006/251826 A1 discloses a method for coating powder material by means of an adhesive to manufacture coated particles useful in 3D binder printing for generative rapid prototyping processes.

Dense, spherical ceramic particles have been prepared by spray fluidization. However, such particles are prepared using a continuous spray fluidization process. Producing ceramic particles having the various desired qualities noted above, such as, a particular porosity and with a narrow size distributions using a continuous spray fluidization process requires a complex manufacturing process that may include post-process mechanical screening operations (i.e., cutting, grinding or filtering) to reduce and normalize the average particle size of oversized fractions of the ceramic particles. These fractions must then be recycled back to the continuous process or be counted as a lost material. Such continuous operations may therefore require excessive expense and may only be practical in certain large production situations.

### SUMMARY

According to one aspect of the invention described herein, a method of forming a plurality of porous ceramic particles may include forming the plurality of porous ceramic particles using a spray fluidization forming process conducted in a batch mode. The batch mode may include at least two batch spray fluidization forming cycles. The plurality of porous ceramic particles formed by the spray fluidization forming process may include an average porosity of at least about 0.01 cc/g and not greater than about 1.60 cc/g. The plurality of porous ceramic particles formed by the spray fluidization forming process may further include an average particle size of at least about 200 microns and not greater than about 2000 microns. Each ceramic particle of the plurality of porous ceramic particles may include a cross-sectional structure including a core region and a layered region overlying the core region.

According to another aspect of the invention described herein, a method of forming a batch of porous ceramic particles may include preparing an initial batch of ceramic particles. The initial batch of ceramic particles may have an initial particle size distribution span IPDS equal to (Id₉₀-Id₁₀)/Id₅₀, where Id₉₀ is equal to a d₉₀ particle size distribution measurement of the initial batch of ceramic particles, Id₁₀ is equal to a d₁₀ particle size distribution measurement of the initial batch of ceramic particles and Id₅₀ is equal to a d₅₀ particle size distribution measurement of the initial batch of ceramic particles. The method may further include forming the initial batch of ceramic particles into a processed batch of porous ceramic particles using a spray fluidization forming process. The processed batch of porous ceramic particles may have a processed particle size distribution span PPDS equal to (Pd₉₀-Pd₁₀)/Pd₅₀, where Pd₉₀ is equal to a d₉₀ particle size distribution measurement of the processed batch of porous ceramic particles, Pd₁₀ is equal to the d₁₀ particle size distribution measurement of the processed batch of porous ceramic particles and Pd₅₀ is equal to a d₅₀ particle size distribution measurement of the processed batch of porous ceramic particles. The ratio IPDS/PPDS for the forming of the initial batch of ceramic particles into the processed batch of porous ceramic particles may be at least about 0.90.

According to another aspect of the invention described herein, a method of forming a catalyst carrier may include forming a porous ceramic particle using a spray fluidization forming process. The porous ceramic particle may have a particle size of at least about 200 microns and not greater than about 2000 microns. The method may further include sintering the porous ceramic particle at a temperature of at least about 350°C and not greater than about 1400°C.

According to still another aspect of the invention described herein, a method of forming a batch of porous ceramic particles may include forming the batch of porous ceramic particles using a spray fluidization forming process conducted in a batch mode. The plurality of porous ceramic particles may have an average particle size of at least about 200 microns and not greater than about 2000 microns.

### BRIEF DESCRIPTION OF THE DRAWINGS

The present disclosure may be better understood, and its numerous features and advantages made apparent to those skilled in the art by referencing the accompanying drawings.
FIG. 1 includes a flow chart illustrating an embodiment of a process for forming a batch of porous ceramic particles;
FIGS. 2A and 2B include graph representations illustrating an initial particle size distribution span and a processed particle size distribution span for a batch of porous ceramic particles;
FIG. 3 includes a flow chart illustrating another embodiment of a process for forming a batch of porous ceramic particles;
FIG. 4 includes an image of a microstructure of an embodiment of a porous ceramic particle illustrating a core region and a layered region of the particle;
FIGS. 5-10 include images of microstructures of embodiments of porous ceramic particle.

The use of the same reference symbols in different drawings indicates similar or identical items.

### DETAILED DESCRIPTION

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus.

As used herein, and unless expressly stated to the contrary, "or" refers to an inclusive- or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

A plurality of porous ceramic particles and a method of forming a plurality of porous ceramic particles are described herein. Embodiments described herein relate to the production of porous ceramic particles by a spray fluidization process. In particular, a batch spray fluidization process is proposed for the production of spherical porous particles of narrow size distribution. It has been found that by employing a batch process that spherical particles having a narrow size distribution can be produced efficiently and economically. Further, by using an iterative growth and divided scheme that may include multiple batch production cycles, large particle sizes can be produced while maintaining the narrow size distribution.

The plurality of porous ceramic particles described herein are formed using a spray fluidization process operating in a batch mode. Forming a plurality of porous ceramic particles using such a process uniformly increases the average particle size of a batch of ceramic particles while maintaining a relatively narrow particle size distribution and a uniform shape of all particles in the batch of porous ceramic particles.

According to a particular embodiment, a spray fluidization process operating in a batch mode may be defined as any spray fluidization process where a first finite number of ceramic particles (i.e., an initial batch) begins the spray fluidization forming process at the same time and are formed into a second finite number of porous ceramic particles (i.e., a processed batch) that all end the spray fluidization process at the same time. According to still another embodiment, a spray fluidization process operating in a batch mode may be further defined as being non-cyclic or non-continuous, meaning that the ceramic particles are not continuously removed and re-introduced into the spray fluidization process at different times than other ceramic particles in the same batch.

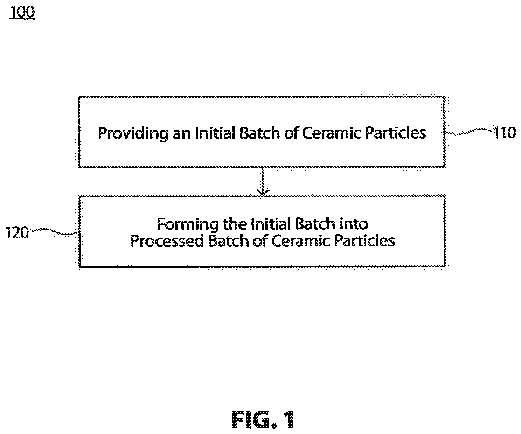

According to yet another embodiment, a spray fluidization process operating in a batch mode may include a batch spray fluidization forming cycle. For purposes of illustration, FIG. 1 includes a flow chart showing a batch spray fluidization forming cycle according to embodiments described herein. As illustrated in FIG. 1, a batch spray fluidization forming cycle 100 for forming a plurality of porous ceramic particles may include a step 110 of providing an initial batch of ceramic particles and a step 120 of forming the initial batch of ceramic particles into a processed batch of porous ceramic particles using a spray fluidization forming process. It will be appreciated that, as used herein, the term batch refers to a finite number of particles that may undergo a forming process cycle as described herein.

According to a particular embodiment, the initial batch of ceramic particles provided in step 110 may include a ceramic material. According to still another embodiment, the initial batch of ceramic particles may consist essentially of a ceramic material. It will be appreciated that the ceramic material may be any desired ceramic material suitable for forming porous ceramic particles, such as, for example, alumina, zirconia, titania, silica or a combination thereof. According to still another embodiment, the initial batch of ceramic particles may include monolithic seed particles. According to yet another embodiment, the initial batch of ceramic particles may include monolithic seed particles with a layered region overlying a surface of the seed particles. It will be appreciated that the initial batch of ceramic particles may include previously unprocessed particles or particles that have undergone a previous forming process cycle.

According to still another embodiment, the initial batch of ceramic particles provided in step 110 may have a particular average particle size (Id₅₀). For example, the initial batch of ceramic particles may have an Id₅₀ of at least about 100 microns, such as, at least about 200 microns, at least about 300 microns, at least about 400 microns, at least about 500 microns, at least about 600 microns, at least about 700 microns, at least about 800 microns, at least about 900 microns, at least about 1000 microns, at least about 1100 microns, at least about 1200 microns, at least about 1300 microns, at least about 1400 microns or even at least about 1490 microns. According to still another embodiment, the initial batch of ceramic particles may have an Id₅₀ of not greater than about 1500 microns, such as, not greater than about 1400 microns, not greater than about 1300 microns, not greater than about 1200 microns, not greater than about 1100 microns, not greater than about 1000 microns, not greater than about 900 microns, not greater than about 800 microns, not greater than about 700 microns, not greater than about 600 microns, not greater than about 500 microns, not greater than about 400 microns, not greater than about 300 microns, not greater than about 200 microns, or even not greater than about 150 microns. It will be appreciated that the initial batch of ceramic particles may have an Id₅₀ of any value between any of the minimum and maximum values noted above.

According to another embodiment, the processed batch of porous ceramic particles formed from the initial batch of ceramic particles in step 120 may include any desired ceramic material suitable for forming porous ceramic particles, such as, for example, alumina, zirconia, titania, silica or a combination thereof. According to still another embodiment, the processed batch of porous ceramic particles may include monolithic seed particles with a layered region overlying a surface of the seed particles.

According to still another embodiment, the processed batch of porous ceramic particles formed from the initial batch of ceramic particles in step 120 may have a particular average particle size (Pd₅₀). For example, the processed batch of porous ceramic particles may have a Pd₅₀ of at least about 200 microns, such as, at least about 300 microns, at least about 400 microns, at least about 500 microns, at least about 600 microns, at least about 700 microns, at least about 800 microns, at least about 900 microns, at least about 1000 microns, at least about 1100 microns, at least about 1200 microns, at least about 1300 microns, at least about 1400 microns, at least about 1500 microns, at least about 1600 microns, at least about 1700 microns, at least about 1800 microns, at least about 1900 microns, or even at least about 1950 microns. According to still another embodiment, the processed batch of porous ceramic particles may have a Pd₅₀ of not greater than about 2000 microns, such as, not greater than about 1900 microns, not greater than about 1800 microns, not greater than about 1700 microns, not greater than about 1600 microns, not greater than about 1500 microns, not greater than about 1400 microns, not greater than about 1300 microns, not greater than about 1200 microns, not greater than about 1100 microns, not greater than about 1000 microns, not greater than about 900 microns, not greater than about 800 microns, not greater than about 700 microns, not greater than about 600 microns, not greater than about 500 microns, not greater than about 400 microns, not greater than about 300 microns, not greater than about 200 microns, or even not greater than about 150 microns. It will be appreciated that the processed batch of porous ceramic particles may have a Pd₅₀ of any value between any of the minimum and maximum values noted above. It will be further appreciated that the processed batch of porous ceramic particles may have a Pd₅₀ of any value within a range between any of the minimum and maximum values noted above.

It will be appreciated that as used herein, and in particular as used in reference to step 120 of cycle 100, a spray fluidization forming cycle may include, generally, any particle forming or growing process where initial or seed particles are fluidized in a stream of heated gas and introduced into a solid material that has been atomized in a liquid. The atomized material collides with the initial or seed particles and, as the liquid evaporates, the solid material is deposited on the outer surface of the initial or seed particles forming a layer or coating that increases the general size or shape of the seed particles. As the particles repeatedly circulate in and out of the atomized material, multiple layers of the solid material are formed or deposited on the initial or seed particles. According to a particular embodiment, spray fluidization may be described as repeatedly dispensing finely dispersed droplets of a coating fluid onto air borne ceramic particles to form the processed batch of porous ceramic particles. It may be further appreciated that a spray fluidization process as described herein may not include any form of or additional mechanism for manually reducing the size of particles during the spray fluidization process.

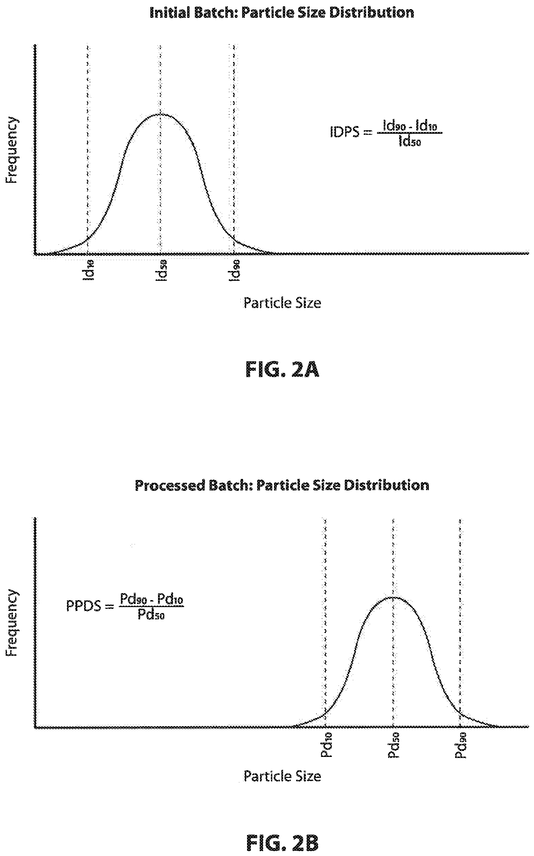

Referring back to FIG. 1, according to certain embodiments described herein, the initial batch of ceramic particles provided during step 110 may be described as having an initial particle size distribution span IPDS and the processed batch of porous ceramic particles formed during step 120 may be described as having a processed particle size distribution span PPDS. For purposes of illustration, FIGS. 2A and 2B include a graph representation of the initial particle size distribution for an initial batch of ceramic particles and the processed particle size distribution for a processed batch of porous ceramic particles, respectively. As shown in FIG. 2A, the initial particle size distribution span IPDS of the initial batch of ceramic particles is equal to (Id₉₀ -Id₁₀/Id₅₀, where Id₉₀ is equal to a d₉₀ particle size distribution measurement of the initial batch of ceramic particles, Id₁₀ is equal to a d₁₀ particle size distribution measurement of the initial batch of ceramic particles and Id₅₀ is equal to a d₅₀ particle size distribution measurement of the initial batch of ceramic particles. As shown in FIG. 2B, the processed particle size distribution span PPDS of the processed batch of porous ceramic particles is equal to (Pd₉₀-Pd₁₀)/Pd₅₀, where Pd₉₀ is equal to a d₉₀ particle size distribution measurement of the processed batch of porous ceramic particles, Pd₁₀ is equal to a d₁₀ particle size distribution measurement of the processed batch of porous ceramic particles and Pd₅₀ is equal to a d₅₀ particle size distribution measurement of the processed batch of porous ceramic particles.

All particle size distribution measurements described herein are determined using a Retsch Technology's CAMSIZER® (for example, the model 8524). The CAMSIZER® measures the two-dimensional projection of the microsphere cross-sections through optical imaging. The projection is converted to a circle of equivalent diameter. The sample is fed to the instrument with a 75 mm width feeder, using the guidance sheet in the top of the sample chamber. The measurements are done with both the Basic and Zoom CCD cameras. An image rate of 1:1 is used. All particles in a batch are included in the calculation; no particles are ignored because of size or shape limits. A measurement typically will image several hundred thousand to several million particles. Calculations are done using the instrument's internal statistical functions, An "xFe_min" particle model is used, with the shape settings for "spherical particles." Statistics are calculated on a volume basis.

According to a certain embodiment described herein, the cycle 1 00 of forming a plurality of porous ceramic particles may include maintaining a particular ratio IPDS/PPDS for the forming of the initial batch of ceramic particles into the processed batch of porous ceramic particles. For example, the method of forming the initial batch of ceramic particles into the processed batch of porous ceramic particles may have a ratio IPDS/PPDS of at least about 0.90, such as, at least about 1.00, at least about 1.05, at least about 1.10, at least about 1.20, at least about 1.30, at least about 1.40, at east about 1.50, at least about 1.60, at least about 1.70, at least about 1.80, at least about 1.90, at least about 2.00, at least about 2.50, at least about 3.00, at least about 3.50, at least about 4.00 or even at least about 4.50. According to still another embodiment, the method of forming the initial batch of ceramic particles into the processed batch of porous ceramic particles may have a ratio IPDS/PPDS of not greater than about 10.00, such as, not greater than about 9.00, not greater than about 8.00, not greater than about 7.00, not greater than about 6.00, or even not greater than about 5.00. It will be appreciated that the method of forming the initial batch of ceramic particles into the processed batch of porous ceramic particles may have a ratio IPDS/PPDS of any value between any of the minimum and maximum values noted above. It will be further appreciated that the method of forming the initial batch of ceramic particles into the processed batch of porous ceramic particles may have a ratio IPDS/PPDS of any value within a range between any of the minimum and maximum values noted above.

According to another particular embodiment, the initial batch of ceramic particles may have a particular initial particle size distribution span IPDS. As noted herein, the initial particle size distribution span is equal to (Id₉₀-Id₁₀)/Id₅₀, where Id₉₀ is equal to a d₉₀ particle size distribution measurement of the initial batch of ceramic particles, Id₁₀ is equal to a d₁₀ particle size distribution measurement of the initial batch of ceramic particles and Id₅₀ is equal to a d₅₀ particle size distribution measurement of the initial batch of ceramic particles. For example, the initial batch of ceramic particles may have an IPDS of not greater than about 2.00, such as, not greater than about 1.90, not greater than about 1.80, not greater than about 1.70, not greater than about 1.60, not greater than about 1.50, not greater than about 1.40, not greater than about 1.30, not greater than about 1.20, not greater than about 1.10, not greater than about 1.00, not greater than about 0.90, not greater than about 0.80, not greater than about 0.70, not greater than about 0.60, not greater than about 0.50, not greater than about 0.40, not greater than about 0.30, not greater than about 0.20, not greater than about 0.10, not greater than about 0.05 or even substantially no initial particle size distribution span where IPDS is equal to zero. According to another particular embodiment, the initial batch of ceramic particles may have an IPDS of at least about 0.01, such as, at least about 0.05, at least about 0.10, at least about 0.20, at least about 0.30, at least about 0.40, at least about 0.50, at least about 0.60 or even at least about 0.70. It will be appreciated that the initial batch of ceramic particles may have an IPDS of any value between any of the minimum and maximum values noted above. It will be further appreciated that the initial batch of ceramic particles may have an IPDS of any value within a range between any of the minimum and maximum values noted above.

According to a yet another embodiment, the processed batch of porous ceramic particles may have a particular processed particle size distribution span PPDS. As noted herein, the processed particle size distribution span is equal to (Pd₉₀-Pd₁₀)/Pd₅₀, where Pd₉₀ is equal to a d₉₀ particle size distribution measurement of the processed batch of porous ceramic particles, Pd₁₀ is equal to a d₁₀ particle size distribution measurement of the processed batch of porous ceramic particles and Pd₅₀ is equal to a d₅₀ particle size distribution measurement of the processed batch of porous ceramic particles. For example, the processed batch of porous ceramic particles may have a PPDS of not greater than about 2.00, such as, not greater than about 1.90, not greater than about 1.80, not greater than about 1.70, not greater than about 1.60, not greater than about 1.50, not greater than about 1.40, not greater than about 1.30, not greater than about 1.20, not greater than about 1.10, not greater than about 1.00, not greater than about 0.90, not greater than about 0.80, not greater than about 0.70, not greater than about 0.60, not greater than about 0.50, not greater than about 0.40, not greater than about 0.30, not greater than about 0.20, not greater than about 0.10, not greater than about 0.05 or even substantially no processed particle size distribution span where PPDS is equal to zero. According to another particular embodiment, the processed batch of porous ceramic particles may have a PPDS of at least about 0.01, such as, at least about 0.05, at least about 0.10, at least about 0.20, at least about 0.30, at least about 0.40, at least about 0.50, at least about 0.60 or even at least about 0.70. It will be appreciated that the processed batch of porous ceramic particles may have a PPDS of any value between any of the minimum and maximum values noted above. It will be further appreciated that the processed batch of porous ceramic particles may have a PPDS of any value within a range between any of the minimum and maximum values noted above.

According to yet another embodiment, the average particle size of the processed batch of porous ceramic particles (Pd₅₀) may be greater than the average particle size of the initial batch of ceramic particles (Id₅₀). According to still another embodiment, the average particle size of the processed batch of porous ceramic particles (Pd₅₀) may be a particular percentage greater than the average particle size of the initial batch of ceramic particles (Id₅₀). For example, the average particle size of the processed batch of porous ceramic particles (Pd₅₀) may be at least about 10% greater than the average particle size of the initial batch of ceramic particles (Id₅₀), such as, at least about 20% greater than the average particle size of the initial batch of ceramic particles (Id₅₀), at least about 30% greater than the average particle size of the initial batch of ceramic particles (Id₅₀), at least about 40% greater than the average particle size of the initial batch of ceramic particles (Id₅₀), at least about 50% greater than the average particle size of the initial batch of ceramic particles (Id₅₀), at least about 60% greater than the average particle size of the initial batch of ceramic particles (Id₅₀), at least about 70% greater than the average particle size of the initial batch of ceramic particles (Id₅₀), at least about 80% greater than the average particle size of the initial batch of ceramic particles (Id₅₀), at least about 90% greater than the average particle size of the initial batch of ceramic particles (Id₅₀), at least about 100% greater than the average particle size of the initial batch of ceramic particles (Id₅₀), at least about 120% greater than the average particle size of the initial batch of ceramic particles (Id₅₀), at least about 140% greater than the average particle size of the initial batch of ceramic particles (Id₅₀), at least about 160% greater than the average particle size of the initial batch of ceramic particles (Id₅₀), at least about 180% greater than the average particle size of the initial batch of ceramic particles (Id₅₀), at least about 200% greater than the average particle size of the initial batch of ceramic particles (Id₅₀), at least about 220% greater than the average particle size of the initial batch of ceramic particles (Id₅₀), at least about 240% greater than the average particle size of the initial batch of ceramic particles (Id₅₀), at least about 260% greater than the average particle size of the initial batch of ceramic particles (Id₅₀), at least about or even at least about 280% greater than the average particle size of the initial batch of ceramic particles (Id₅₀). According to still another embodiment, the average particle size of the processed batch of porous ceramic particles (Pd₅₀) may be not greater than about 300% greater than the average particle size of the initial batch of ceramic particles (Id₅₀), such as, not greater than about 280% greater than the average particle size of the initial batch of ceramic particles (Id₅₀), not greater than about 260% greater than the average particle size of the initial batch of ceramic particles (Id₅₀), not greater than about 240% greater than the average particle size of the initial batch of ceramic particles (Id₅₀), not greater than about 220% greater than the average particle size of the initial batch of ceramic particles (Id₅₀), not greater than about 200% greater than the average particle size of the initial batch of ceramic particles (Id₅₀), not greater than about 180% greater than the average particle size of the initial batch of ceramic particles (Id₅₀), not greater than about 160% greater than the average particle size of the initial batch of ceramic particles (Id₅₀), not greater than about 140% greater than the average particle size of the initial batch of ceramic particles (Id₅₀), not greater than about 120% greater than the average particle size of the initial batch of ceramic particles (Id₅₀), not greater than about 100% greater than the average particle size of the initial batch of ceramic particles (Id₅₀), not greater than about 90% greater than the average particle size of the initial batch of ceramic particles (Id₅₀), not greater than about 80% greater than the average particle size of the initial batch of ceramic particles (Id₅₀), not greater than about 70% greater than the average particle size of the initial batch of ceramic particles (Id₅₀), not greater than about 60% greater than the average particle size of the initial batch of ceramic particles (Id₅₀), not greater than about 50% greater than the average particle size of the initial batch of ceramic particles (Id₅₀), not greater than about 40% greater than the average particle size of the initial batch of ceramic particles (Id₅₀), not greater than about 30% greater than the average particle size of the initial batch of ceramic particles (Id₅₀) or even not greater than about 20% greater than the average particle size of the initial batch of ceramic particles (Id₅₀). It will be appreciated that the processed batch of porous ceramic particles may have a Pd₅₀ of any percentage greater than the average particle size of the initial batch of ceramic particles (Id₅₀) between any of the minimum and maximum values noted above. It will be further appreciated that the processed batch of porous ceramic particles may have a Pd₅₀ of any percentage greater than the average particle size of the initial batch of ceramic particles (Id₅₀) within a range between any of the minimum and maximum values noted above.

According to yet another embodiment, the initial batch of ceramic particles may have a particular average sphericity. For example, the initial particles may have an average sphericity of at least about 0.80, such as, at least about 0.82, at least about 0.85, at least about 0.87, at least about 0.90, at least about 0.92 or even at least about 0.94. According to still another embodiment, the initial batch of ceramic particles may have an average sphericity of not greater than about 0.95, such as, not greater than about 0.93, not greater than about 0.90, not greater than about 0.88, not greater than about 0.85, not greater than about 0.83 or even not greater than about 0.81. It will be appreciated that the initial batch of ceramic particles may have a sphericity of any value between any of the minimum and maximum values noted above. It will be further appreciated that the initial batch of ceramic particles may have a sphericity of any value within a range between any of the minimum and maximum values noted above. It will also be appreciated that sphericity as described herein may be measured using CAMSIZER® Shape Analysis.

According to yet another embodiment, the processed batch of porous ceramic particles may have a particular average sphericity. For example, the processed batch of porous ceramic particles may have an average sphericity of at least about 0.80, such as, at least about 0.82, at least about 0.85, at least about 0.87, at least about 0.9, at least about 0.92 or even at least about 0.94. According to still another embodiment, the processed batch of porous ceramic particles may have an average sphericity of not greater than about 0.95, such as, not greater than about 0.93, not greater than about 0.90, not greater than about 0.88, not greater than about 0.85, not greater than about 0.83 or even not greater than about 0.81. It will be appreciated that the processed batch of porous ceramic particles may have a sphericity of any value between any of the minimum and maximum values noted above. It will be further appreciated that the processed batch of porous ceramic particles may have a sphericity of any value within a range between any of the minimum and maximum values noted above. It will also be appreciated that sphericity as described herein may be measured using CAMSIZER® Shape Analysis.

According to still another embodiment, the processed batch of porous ceramic particles may have a particular porosity. For example, the processed batch of porous ceramic particles may have an average porosity of at least about 0.01 cc/g, such as, at least about 0.05 cc/g, at least about 0.10 cc/g, at least about 0.25 cc/g, at least about 0.50 cc/g, at least about 0.75 cc/g, at least about 1.00 cc/g. at least about 1.10 cc/g, at least about 1.20 cc/g, at least about 1.30 cc/g, at least about 1.40 cc/g, at least about 1.50 cc/g or even at least about 1.55 cc/g. According to still another embodiment, the processed batch of porous ceramic particles may have an average porosity of not greater than about 1.60 cc/g, such as, not greater than about 1.55 cc/g, not greater than about 1.50 cc/g, not greater than about 1.45 cc/g, not greater than about 1.40 cc/g, not greater than about 1.35 cc/g, not greater than about 1.30 cc/g, not greater than about 1.25 cc/g, not greater than about 1.20 cc/g, not greater than about 1.15 cc/g, not greater than about 1.10 cc/g, not greater than about 1.05 cc/g, not greater than about 1.00 cc/g, not greater than about 0.95 cc/g, not greater than about 0.90 cc/g or even not greater than about 0.85 cc/g. It will be further appreciated that the processed batch of porous ceramic particles may have a porosity of any value within a range between any of the minimum and maximum values noted above. Porosity, pore volume or pore size distribution as described herein is determined by mercury intrusion using pressures from 25 to 60,000 psi, using a Micrometrics Autopore 9500 model (130° contact angle, mercury with a surface tension of 0.480 N/m, and no correction for mercury compression).

According to yet another embodiment, the number of ceramic particles that make up the processed batch of porous ceramic particles may be equal to a particular percentage of the number of ceramic particles that make up the initial batch of ceramic particles. For example, the number of ceramic particles in the processed batch may be equal to at least about 80% of the number of ceramic particles in the initial batch, such as, at least about 85% of the number of ceramic particles in the initial batch, at least about 90% of the number of ceramic particles in the initial batch, at least about 91% of the number of ceramic particles in the initial batch, at least about 92% of the number of ceramic particles in the initial batch, at least about 93% of the number of ceramic particles in the initial batch, at least about 94% of the number of ceramic particles in the initial batch, at least about 95% of the number of ceramic particles in the initial batch, at least about 96% of the number of ceramic particles in the initial batch, at least about 97% of the number of ceramic particles in the initial batch, at least about 98% of the number of ceramic particles in the initial batch or even at least about 99% of the number of ceramic particles in the initial batch. According to yet another particular embodiment, the number of ceramic particles in the processed batch may be equal to the number of ceramic particles in the initial batch. It will be appreciated that the number of ceramic particles in the processed batch may be equal to any percentage of the number of ceramic particles in the initial batch between any of the minimum and maximum values noted above. It will be further appreciated that the number of ceramic particles in the processed batch may be equal to any percentage of the number of ceramic particles in the initial batch between any of the minimum and maximum values noted above.

According to still another embodiment, a spray fluidization process operating in a batch made may include initiating spray fluidization of the entire initial batch of ceramic particles, spray fluidizing the entire initial batch of ceramic particles to form the entire processed batch of porous ceramic particles, and terminating the spray fluidization of the entire processed batch.

According to still another embodiment, a spray fluidization process operating in a batch mode may include conducting spray fluidization on the entire initial batch of ceramic particles for predetermined period of time where all ceramic particles in the initial batch begin the forming process at the same time and finish the forming process at the same time. For example, the spray fluidization process may last at least about 10 minutes, such as, at least about 30 minutes, at least about 60 minutes, at least about 90 minutes, at least about 120 minutes, at least about 240 minutes, at least about 360 minutes, at least about 480 minutes or even at least about 600 minutes. According to still another embodiment, the spray fluidization process may last not greater than about 720 minutes, such as, not greater than about 600 minutes, not greater than about 480 minutes, not greater than about 360 minutes, not greater than about 240 minutes, not greater than about 120 minutes, not greater than about 90 minutes, not greater than about 60 minutes or even not greater than about 30 minutes. It will be appreciated that the spray fluidization process may last any number of minutes between any of the minimum and maximum values noted above. It will be further appreciated that the spray fluidization process may last any number of minutes within a range between any of the minimum and maximum values noted above.

Again referring back to FIG. 1, according to a particular embodiment, the step 120 of forming the initial batch of ceramic particles into the processed batch of porous ceramic particles may further include sintering the porous ceramic particles after the spray fluidization process is complete. Sintering the processed batch of porous ceramic particles may occur at a particular temperature. For example, the processed batch of porous ceramic particle may be sintered at a temperature of at least about 350 °C, such as, at least about 375 °C, at least about 400 °C, at least about 425 °C, at least about 450 °C, at least about 475 °C, at least about 500 °C, at least about 525 °C, at least about 550 °C, at least about 575 °C, at least about 600 °C, at least about 625 °C, at least about 650 °C, at least about 675 °C, at least about 700 °C, at least about 725 °C, at least about 750 °C, at least about 775 °C, at least about 800 °C, at least about 825 °C, at least about 850 °C, at least about 875 °C, at least about 900 °C, at least about 925 °C, at least about 950 °C, at least about 975 °C, at least about 1000 °C, at least about 1100 °C, at least about 1200 °C or even at least about 1300 °C. According to still another embodiment, the processed batch of porous ceramic particle may be sintered at a temperature of not greater than about 1400 °C, such as, not greater than about 1300 °C, not greater than about 1200 °C, not greater than about 1100 °C, not greater than about 1000 °C, not greater than about 975 °C, not greater than about 950 °C, not greater than about 925 °C, not greater than about 900 °C, not greater than about 875 °C, not greater than about 850 °C, not greater than about 825 °C, not greater than about 800 °C, not greater than about 775 °C, not greater than about 750 °C, not greater than about 725 °C, not greater than about 700 °C, not greater than about 675 °C, not greater than about 650 °C, not greater than about 625 °C, not greater than about 600 °C, not greater than about 575 °C, not greater than about 550 °C, not greater than about 525 °C, not greater than about 500 °C, not greater than about 475 °C, not greater than about 450 °C, not greater than about 425 °C, not greater than about 400 °C or even not greater than about 375 °C. It will be appreciated that the processed batch of porous ceramic particles may be sintered at any temperature between any of the minimum and maximum values noted above. It will be further appreciated that the spray fluidization process may last any number of minutes within a range between any of the minimum and maximum values noted above.

According to yet another particular embodiment, a spray fluidization process operating in a batch mode may include multiple batch spray fluidization forming cycles as described in reference to the cycle 100 illustrated in FIG. 1, where each cycle includes a step 110 of providing an initial batch of ceramic particles and a step 120 of forming the initial batch into a processed batch of porous ceramic particles using a spray fluidization forming process. It will be appreciated that the processed batch of porous ceramic particles from any cycle may be used to form the initial batch of ceramic particles for the subsequent cycle. For example, the processed batch of porous ceramic particles formed during a first batch spray fluidization forming cycle 100 may then be used as the initial batch in a second batch spray fluidization forming cycle 100. It will also be appreciated that all description and embodiments described herein with regard to cycle 100 as illustrated in FIG. 1 may be applied to any cycle of a multi-cycle spray fluidization process operating in a batch mode for forming a plurality of porous ceramic particle as described herein.

According to a particular embodiment, a spray fluidization process operating in a batch mode may include a particular number of batch spray fluidization forming cycles. For example, a spray fluidization process operating in a batch mode may include at least 2 batch spray fluidization forming cycles, such as, at least 3 batch spray fluidization forming cycles, at least 4 batch spray fluidization forming cycles, at least 5 batch spray fluidization forming cycles, at least 6 batch spray fluidization forming cycles, at least 7 batch spray fluidization forming cycles, at least 8 batch spray fluidization forming cycles, at least 9 batch spray fluidization forming cycles or even at least 10 batch spray fluidization forming cycles. According to another embodiment, a spray fluidization process operating in a batch mode may include not greater than 15 batch spray fluidization forming cycles, such as, not greater than 10 batch spray fluidization forming cycles, not greater than 9 batch spray fluidization forming cycles, not greater than 8 batch spray fluidization forming cycles, not greater than 7 batch spray fluidization forming cycles, not greater than 6 batch spray fluidization forming cycles, not greater than 5 batch spray fluidization forming cycles, not greater than 4 batch spray fluidization forming cycles or even not greater than 3 batch spray fluidization forming cycles. It will be appreciate that a spray fluidization process operating in a batch mode may include any number of cycles between any of the minimum and maximum values noted above. It will be further appreciated that a spray fluidization process operating in a batch mode may include any number of cycles within a range between any of the minimum and maximum values noted above.

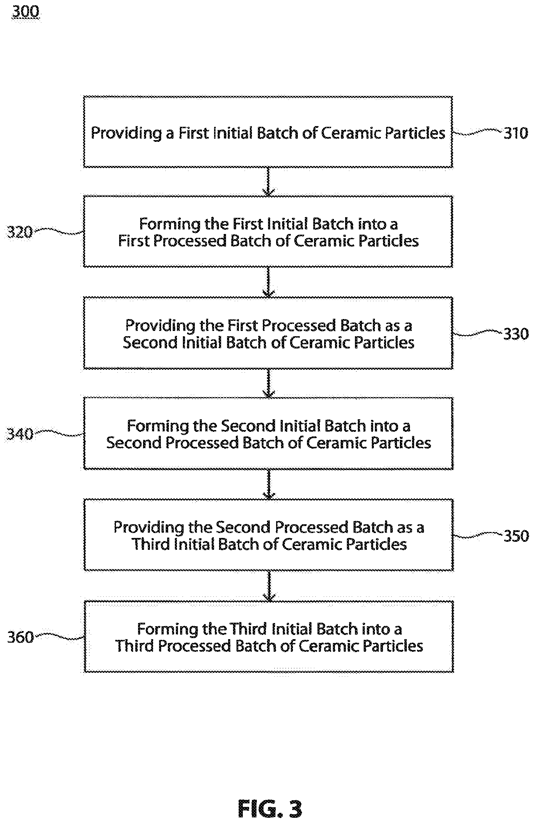

For purposes of illustration, FIG. 3 includes a flow chart showing an embodiment of a spray fluidization process operating in a batch mode for forming a plurality of porous ceramic particles that includes three batch spray fluidization forming cycles. As illustrated in FIG. 3, a process 300 for forming porous ceramic particles may include, as the first cycle, a step 310 of providing a first initial batch of ceramic particles and a step 320 of forming the first initial batch into a first processed batch of porous ceramic particles using a spray fluidization forming process. Next, the process 300 may include, as the second cycle, a step 330 of providing the first processed batch as a second initial batch of ceramic particles and a step 340 of forming the second initial batch into a second processed batch of porous ceramic particles using a spray fluidization forming process. Finally, the process 300 may include, as the third cycle, a step 350 of providing the second processed batch as a third initial batch of ceramic particles and a step 360 of forming the third initial batch into a third processed batch of porous ceramic particles using a spray fluidization forming process. It will be appreciated that the third processed batch may be referred to as a final processed batch.

Referring to still another embodiment, a plurality of porous ceramic particles formed by a spray fluidization process operating in a batch mode according to embodiments described herein may have a particular average porosity. For example, a plurality of porous ceramic particles may have an average porosity of at least about 0.01 cc/g, such as, at least about 0.05 cc/g, at least about 0. 10 cc/g, at least about 0.25 cc/g, at least about 0.50 cc/g, at least about 0.75 cc/g, at least about 1.00 cc/g, at least about 1.10 cc/g, at least about 1.20 cc/g, at least about 1.30 cc/g, at least about 1.40 cc/g, at least about 1.50 cc/g or even at least about 1.55 cc/g. According to still another embodiment, a plurality of porous ceramic particles may liave an average porosity of not greater than about 1.60 cc/g, such as, not greater than about 1.55 cc/g, not greater than about 1.50 cc/g, not greater than about 1.45 cc/g, not greater than about 1.40 cc/g, not greater than about 1.35 cc/g, not greater than about 1.30 cc/g, not greater than about 1.25 cc/g, not greater than about 1.20 cc/g, not greater than about 1.15 cc/g, not greater than about 1.10 cc/g, not greater than about 1.05 cc/g, not greater than about 1.00 cc/g, not greater than about 0.95 cc/g, not greater than about 0.90 cc/g or even not greater than about 0.85 cc/g. It will be appreciated that a plurality of porous ceramic particles may have an average porosity of any value between any of the minimum and maximum values noted above. It will be further appreciated that a plurality of porous ceramic particles may have an average porosity of any value within a range between any of the minimum and maximum values noted above.

According to still another embodiment, a plurality of porous ceramic particles formed by a spray fluidization process operating in a batch mode according to embodiments described herein may have a particular average particle size. For example, a plurality of porous ceramic particles may have an average particle size of at least about 100 microns, such as, at least about 200 microns, at least about 300 microns, at least about 400 microns, at least about 500 microns, at least about 600 microns, at least about 700 microns, at least about 800 microns, at least about 900 microns, at least about 1000 microns, at least about 1100 microns, at least about 1200 microns, at least about 1300 microns, at least about 1400 microns or even at least about 1490 microns. According to still another embodiment, a plurality of porous ceramic particles may have an average particle size of not greater than about 1500 microns, such as, not greater than about 1400 microns, not greater than about 1300 microns, not greater than about 1200 microns, not greater than about 1100 microns, not greater than about 1000 microns, not greater than about 900 microns, not greater than about 800 microns, not greater than about 700 microns, not greater than about 600 microns, not greater than about 500 microns, not greater than about 400 microns, not greater than about 300 microns, not greater than about 200 microns, or even not greater than about 150 microns. It will be appreciated that the plurality of porous ceramic particles may have an average particle size of any value between any of the minimum and maximum values noted above. It will be further appreciated that the plurality of porous ceramic particles may have an average particle size of any value within a range between any of the minimum and maximum values noted above.

According to yet another embodiment, a plurality of porous ceramic particles formed by a spray fluidization process operating in a batch mode according to embodiments described herein may have a particular average sphericity. For example a plurality of porous ceramic particles may have an average sphericity of at least about 0.80, such as, at least about 0.82, at least about 0.85, at least about 0.87, at least about 0.90, at least about 0.92 or even at least about 0.94. According to still another embodiment, a plurality of porous ceramic particles may have an average sphericity of not greater than about 0.95, such as, not greater than about 0.93, not greater than about 0.90, not greater than about 0.88, not greater than about 0.85, not greater than about 0.83 or even not greater than about 0.81. It will be appreciated that the plurality of porous ceramic particles may have a sphericity of any value between any of the minimum and maximum values noted above. It will be further appreciated that the plurality of porous ceramic particles may have a sphericity of any value within a range between any of the minimum and maximum values noted above.

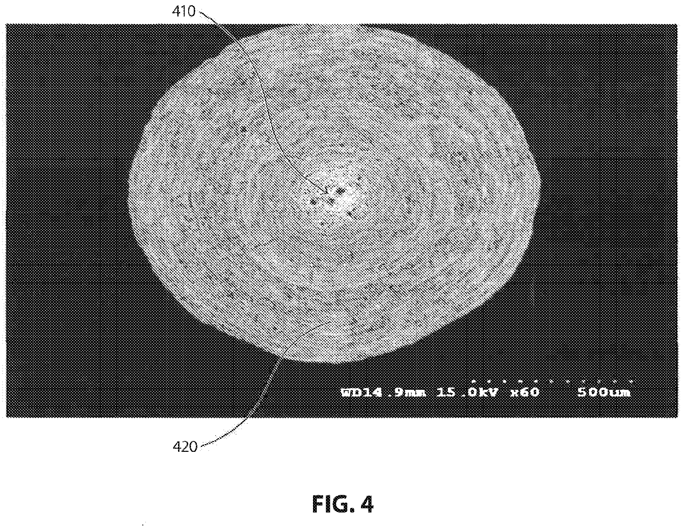

Referring to yet another embodiment, a plurality of porous ceramic particles formed according to embodiments described herein may each include a particular cross-section having a core region and a layered region overlying the core region. By way of illustration, FIG. 4 shows a cross-sectional image of an embodiment of a porous ceramic particle formed according to embodiments described herein. As shown in FIG. 4, a porous ceramic particle 400 may include a core region 410 and a layered region 420 overlying the core region 410.

It will be appreciated that, according to certain embodiments, the core region 410 may be referred to as a seed or initial particle. According to still other embodiments, the core region 410 may be monolithic. According to still other embodiments, the core region 410 may include a ceramic material. According to still other embodiments, the core region may consist essentially of a ceramic material. It will be appreciated that the ceramic material may be any desired ceramic material suitable for forming porous ceramic particles, such as, for example, alumina, zirconia, titania, silica or a combination thereof.

According to yet another embodiment, the layered region 420 may be referred to as an outer region or shell region overlying the core region. According to still another embodiment, the layered region 420 may include overlapping layers surrounding the core region 410. According to still another embodiment, the layered region 420 may include a ceramic material. According to still another embodiment, the layered region 420 may consist essentially of a ceramic material. It will be appreciated that the ceramic material may be any desired ceramic material suitable for forming porous ceramic particles, such as, for example, alumina, zirconia, titania, silica or a combination thereof.

According to still another embodiment, the layered region 420 may have a particular porosity. For example, the layered region 420 may have an average porosity of at least about 0.01 cc/g, such as, at least about 0.05 cc/g, at least about 0.10 cc/g, at least about 0.25 cc/g, at least about 0.50 cc/g, at least about 0.75 cc/g, at least about 1.00 cc/g, at least about 1.10 cc/g, at least about 1.20 cc/g, at least about 1.30 cc/g, at least about 1.40 cc/g, at least about 1.50 cc/g or even at least about 1.55 cc/g. According to still another embodiment, the layered region 420 may have an average porosity of not greater than about 1.60 cc/g, such as, not greater than about 1.55 cc/g, not greater than about 1.50 cc/g, not greater than about 1.45 cc/g, not greater than about 1.40 cc/g, not greater than about 1.35 cc/g, not greater than about 1.30 cc/g, not greater than about 1.25 cc/g, not greater than about 1.20 cc/g, not greater than about 1.15 cc/g, not greater than about 1.10 cc/g, not greater than about 1.05 cc/g, not greater than about 1.00 cc/g, not greater than about 0.95 cc/g, not greater than about 0.90 cc/g or even not greater than about 0.85 cc/g. It will be appreciated that the layered region may have a porosity of any value between any of the minimum and maximum values noted above. It will be further appreciated that the layered region may have a porosity of any value within a range between any of the minimum and maximum values noted above.

According to another embodiment, the layered region 420 may make up a particular volume percentage of the total volume of the porous ceramic particle 400. For example, the layered region 420 may make up at least about 50 vol% of the total volume of the porous ceramic particle 400, such as, at least about 55 vol% of the total volume of the porous ceramic particle 400, at least about 60 vol% of the total volume of the porous ceramic particle 400, at least about 65 vol% of the total volume of the porous ceramic particle 400, at least about 70 vol% of the total volume of the porous ceramic particle 400, at least about 75 vol% of the total volume of the porous ceramic particle 400, at least about 80 vol% of the total volume of the porous ceramic particle 400, at least about 85 vol% of the total volume of the porous ceramic particle 400, at least about 90 vol% of the total volume of the porous ceramic particle 400, at least about 95 vol% of the total volume of the porous ceramic particle 400 or even at least about 99 vol% of the total volume of the porous ceramic particle 400. According to still another embodiment, the layered region may make up not greater than about 99.5 vol% of the total volume of the porous ceramic particle 400, such as, not greater than about 99 vol% of the total volume of the porous ceramic particle 400, not greater than about 95 vol% of the total volume of the porous ceramic particle 400, not greater than about 90 vol% of the total volume of the porous ceramic particle 400, not greater than about 85 vol% of the total volume of the porous ceramic particle 400, not greater than about 80 vol% of the total volume of the porous ceramic particle 400, not greater than about 75 vol% of the total volume of the porous ceramic particle 400, not greater than about 70 vol% of the total volume of the porous ceramic particle 400, not greater than about 65 vol% of the total volume of the porous ceramic particle 400, not greater than about 60 vol% of the total volume of the porous ceramic particle 400 or even not greater than about 55 vol% of the total volume of the porous ceramic particle 400. It will be appreciated that the layered region 420 may make up any volume percentage of the total volume of the porous ceramic particle 400 between any of the minimum and maximum values noted above. It will be further appreciated that the layered region 420 may make up any volume percentage of the total volume of the porous ceramic particle 400 within a range between any of the minimum and maximum values noted above.

According to a particular embodiment, the core region 410 and the layered region 420 may be formed of the same material. According to yet another embodiment, the core region 410 and the layered region 420 may be formed of different materials. According to yet another particular embodiment, the core region 410 may include a first alumina phase and the layered region may include a second alumina phase. According to still another embodiment, the first alumina phase and the second alumina phase may be the same. According to still another embodiment, the first alumina phase and the second alumina phase may be distinct. According to yet another embodiment, the first alumina phase may be an alpha alumina and the second alumina phases may be a non-alpha alumina phase.

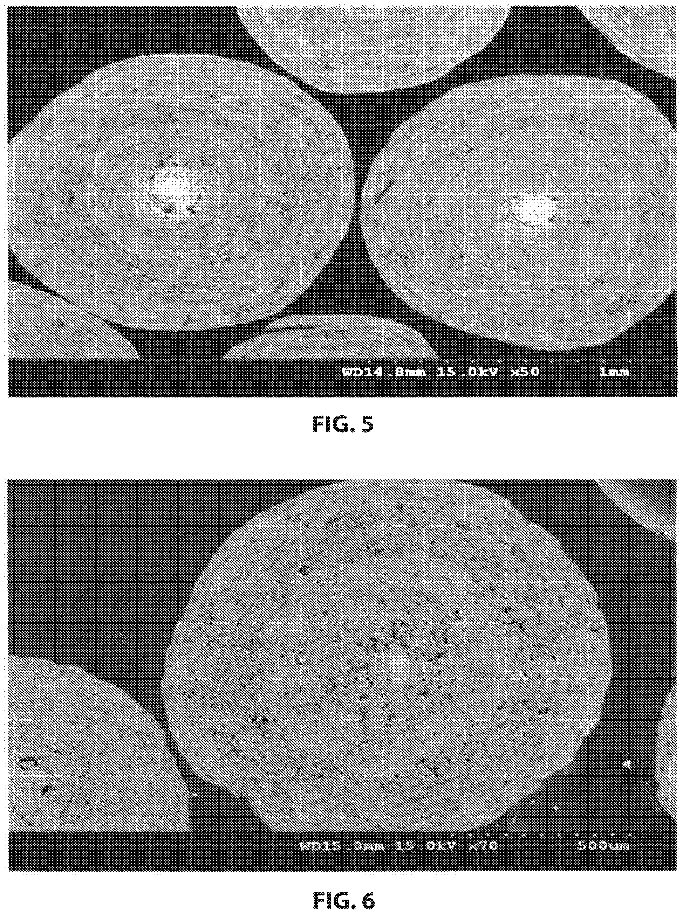

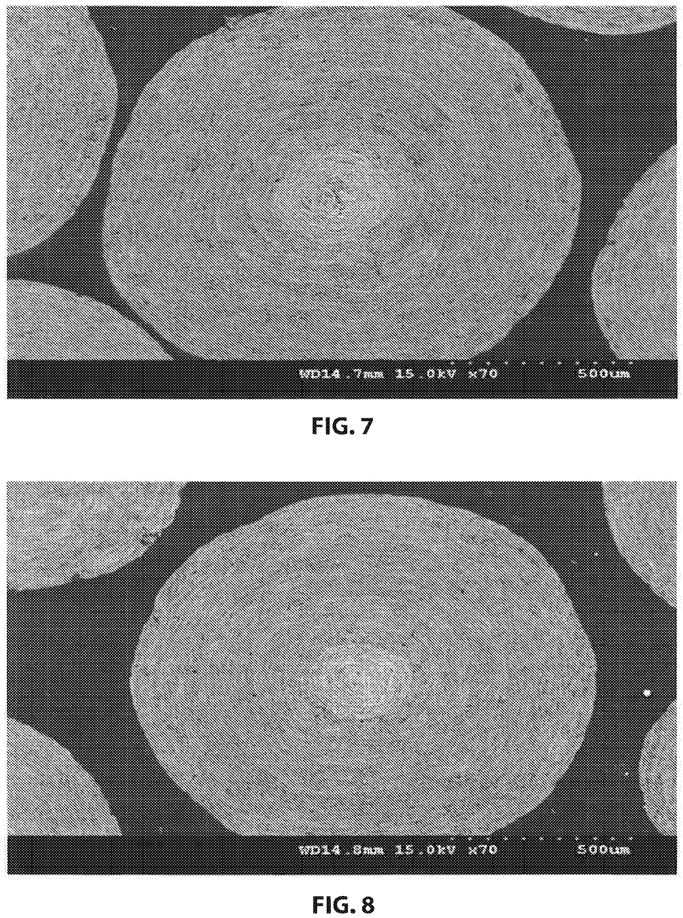

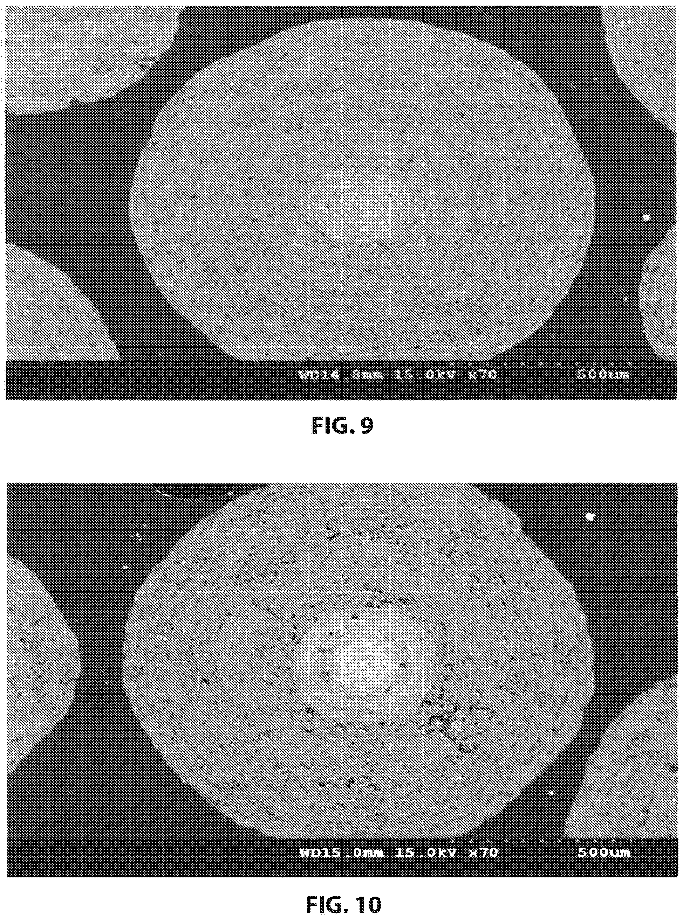

For purposes of illustration, FIGS. 5-10 include cross-sectional images of porous ceramic particles formed according to embodiments described herein.

According to still another particular embodiment, the porous ceramic particles described herein may be formed as a catalyst carrier or a component of a catalyst carrier. It will be appreciated that where the porous ceramic particles described herein are formed as a catalyst carrier or a component of a catalyst carrier, the catalyst carrier may be described as having any of the characteristics described herein with reference to a porous ceramic particle or a batch of porous ceramic particles.

### EXAMPLES:

Example 1: A four cycle process according to an embodiment described herein was used to form an example batch of ceramic particles that were then formed into a catalyst carrier.

In cycle 1 of the process, seed particles of a Boehmite (alumina) material were used to form a first initial batch of ceramic particles, which had a mass of 800 grams. As measured by the CAMSIZER®, this first initial batch of ceramic particles had a particle size distribution including an Id₁₀ = 110 µm, an Id₅₀ = 123 µm, and an Id₉₀ = 143 µm. The initial particle size distribution span IPDS was equal to 0.27. The first initial batch of ceramic particles was loaded into a VFC-3 spray-fluidizer. These particles were fluidized with an airflow of 38 Standard Cubic Feet Per Minute (SCFM) (which is equivalent to 1076 lpm) at the beginning of the run and a temperature of nominally 100°C. This airflow was gradually increased over the course of the run to 50 SCFM (1416 lpm). A Boehmite slip was sprayed onto this fluidized bed of particles. The slip consisted of 125 pounds of deionized water, 48.4 pounds of UOP Versal 250 Boehmite alumina, and 1.9 pounds of concentrated nitric acid. The slip had a pH of 4.3, a solids content of 23.4%, and was milled to a median particle size of 4.8 µm. The slip was atomized through a two-fluid nozzle, with an atomization air pressure of 32 psi. A mass of 10,830 grams of slip was applied to the bed of particles over the course of three and one half hours to form a first processed batch of porous ceramic particles. The first processed batch of porous ceramic particles had a mass of 2608 grams and a particle size distribution including a Pd₁₀ = 168 µm, a Pd₅₀ = 180 µm and a Pd₉₀ = 196 µm. The processed particle size distribution span PPDS was equal to 0.16. The ratio IPDS/PPDS for the first cycle of the forming process was equal to 1.7.

In cycle 2 of the process, 2250 grams of the first processed batch of porous ceramic particles (i.e., the product of cycle 1) were used to form a second initial batch of ceramic particles. The second initial batch of ceramic particles had a particle size distribution including an Id₁₀ = 168 µm, an Id₅₀ = 180 µm and an Id₉₀ = 196 µm, and the initial particle size distribution span IPDS was equal to 0.16. These second initial batch of ceramic particles were fluidized with a starting airflow of 45 SCFM (1274 lpm), increasing to 58 SCFM (1642 lpm) by the end of the run, and a temperature of nominally 100°C. A slip of a similar composition as the first cycle was sprayed onto the bed of seeds through the two-fluid nozzle, with an atomization air pressure of 30 psi. A mass of 17,689 grams of slip was applied to the second initial batch of ceramic particles over the course of four and three-quarter hours to form the second processed batch of porous ceramic particles. The second processed batch of porous ceramic particles had a mass of 5796 grams and a particle size distribution includes a Pd₁₀ = 225 µm, a Pd₅₀ = 242 µm and a Pd₉₀ = 262 µm. The processed particle size distribution span PPDS was equal to 0.15. The ratio IPDS/PPDS for the second cycle of the forming process was equal to 1.02.

In cycle 3 of the process, 500 grams of the second processed batch of porous ceramic particles (i.e., the product of cycle 2) were used to form a third initial batch of ceramic particles. The third initial batch of ceramic particles had a particle size distribution including an Id₁₀ = 225 µm, an Id₅₀ = 242 µm and an Id₉₀ = 262 µm, and the initial particle size distribution span IPDS was equal to 0.15. The third initial batch of ceramic particles was fluidized with a starting airflow of 55 SCFM (1557 lpm), increasing to 68 SCFM (1926 lpm) by the end of the run, and a temperature of nominally 100°C. A slip of similar composition as the first cycle is sprayed onto the bed of seeds through the two-fluid nozzle, with an atomization air pressure of 30 psi. A mass of 11,138 grams of slip was applied to the third initial batch of ceramic particles over the course of four and three-quarter hours to form the third processed batch of porous ceramic particles. The third batch of porous ceramic particles had a mass of 2877 grams and a particle size distribution includes a Pd₁₀ = 430 µm, a Pd₅₀ = 463 µm and a Pd₉₀ = 499 µm. The processed particle size distribution span PPDS was equal to 0.15. The ratio IPDS/PPDS for the third cycle of the forming process was equal to 1.03.

In cycle 4 of the process, 2840 grams of third processed batch of porous ceramic particles (i.e., the product of cycle 3) were used to form a fourth initial batch of ceramic particles. The fourth initial batch of ceramic particles had a particle size distribution including an Id₁₀ = 430 µm, an Id₅₀ = 463 µm and an Id₉₀ = 499 µm, and the initial particle size distribution span IPDS was equal to 0.15. The fourth initial batch of ceramic particles was fluidized with a starting airflow of 75 SCFM (2123 lpm), increasing to 78 SCFM (2209 lpm) by the end of the run, and a temperature of nominally 100°C. A slip of similar composition as the first cycle is sprayed onto the bed of seeds through the two-fluid nozzle, with an atomization air pressure of 30 psi. A mass of 3400 grams of slip was applied to the fourth initial batch of ceramic particles over the course of thirty minutes to form the fourth processed batch of porous ceramic particles. The fourth batch of porous ceramic particles had a mass of 3581 grams and a particle size distribution that included a Pd₁₀ = 466 µm, a Pd₅₀ = 501 µm and a Pd₉₀ = 538 µm. The processed particle size distribution span PPDS was equal to 0.14. The ratio IPDS/PPDS for the fourth cycle of the forming process was equal to 1.04.

The fourth batch of porous ceramic particles from cycle 4 was fired in a rotary calciner at 1200°C forming an alpha alumina (as determined by powder x-ray diffraction) catalyst carrier with a nitrogen BET surface area of 10.0 m²/gram, a mercury intrusion volume of 0.49 cm³/gram. The catalyst carriers had a particle size distribution that includes a D₁₀ = 377 µm, a D₅₀ = 409 µm, a D₉₀ = 447 µm. Further, the catalyst carriers had a distribution span of 0.16, and a CAMSIZER® Shape Analysis Sphericity of 96.0%.

Example 2: A three cycle process according to an embodiment described herein was used to form an example batch of ceramic particles.

In cycle 1 of the process, seed particles of a Boehmite (alumina) material were used to form a first initial batch of ceramic particles, which had a mass of 2800 grams. As measured by the CAMSIZER®, this first initial batch of ceramic particles had a particle size distribution including an Id₁₀ = 180 µm, an Id₅₀ = 197 µm, and an Id₉₀ = 216 µm. The initial particle size distribution span IPDS was equal to 0.17. The first initial batch of ceramic particles was loaded into a VFC-3 spray-fluidizer from Freund-Vector Corporation of Marion, IA USA. These particles were fluidized with an airflow of 50 SCFM (1416 lpm), at the beginning of the run and a temperature of nominally 100°C. This airflow was gradually increased over the course of the run to 55 SCFM (1557 lpm). A Boehmite slip was sprayed onto this fluidized bed of particles. The slip consisted of 175 pounds of deionized water, 72 pounds of UOP Versal 250 Boehmite alumina, and 2.7 pounds of concentrated nitric acid. The slip had a pH of 4.8, a solids content of 23.9%, and is milled to a median particle size of 4.68 µm. The slip was atomized through a two-fluid nozzle, with an atomization air pressure of 35 psi. A mass of 6850 grams of slip was applied to the bed of particles over the course of two hours to form a first processed batch of porous ceramic particles. The first processed batch of porous ceramic particles had a mass of 4248 grams and a particle size distribution including a Pd₁₀ = 210 µm, a Pd₅₀ = 227 µm and a Pd₉₀ = 248 µm. The processed particle size distribution span PPDS was equal to 0.17. The ratio IPDS/PPDS for the first cycle of the forming process was equal to 1.09.

In cycle 2 of the process, 1250 grams of first processed batch of porous ceramic particles (i.e., the product of cycle 1) were used to form a second initial batch of ceramic particles. The second initial batch of ceramic particles had a particle size distribution including an Id₁₀ = 210 µm, an Id₅₀ = 227 µm and an Id₉₀ = 248 µm, and the initial particle size distribution span IPDS was equal to 0.17. The second initial batch of ceramic particles was fluidized with a starting airflow of 55 SCFM (1557 lpm), increasing to 67 SCFM (1897 lpm) by the end of the run, and a temperature of nominally 100°C. A slip of similar composition as the first cycle was sprayed onto the bed of seeds through the two-fluid nozzle, with an atomization air pressure of 35 psi. A mass of 16,350 grams of slip was applied to the second initial batch of ceramic particles over the course of four hours to form the second processed batch of porous ceramic particles. The second processed batch of porous ceramic particles had a mass of 4533 grams and a particle size distribution includes a Pd₁₀ = 333 µm, a Pd₅₀ = 356 µm and a Pd₉₀ = 381 µm. The processed particle size distribution span PPDS was equal to 0.14. The ratio IPDS/PPDS for the second cycle of the forming process was equal to 1.24.

In cycle 3 of the process, 1000 grams of the second processed batch of porous ceramic particles (i.e., the product of cycle 2) were used to form a third initial batch of ceramic particles. The third initial batch of ceramic particles had a particle size distribution including an Id₁₀ = 333 µm, an Id₅₀ = 356 µm and an Id₉₀ = 381 µm, and the initial particle size distribution span IPDS was equal to 0.14. The third initial batch of ceramic particles was fluidized with a starting airflow of 75 SCFM (2123 lpm), increasing to 89 SCFM (2529 lpm) by the end of the run, and a temperature of nominally 100°C. A slip of similar composition as the first cycle was sprayed onto the bed of seeds through the two-fluid nozzle, with an atomization air pressure of 35 psi. A mass of 13,000 grams of slip was applied to the third initial batch of ceramic particles over the course of two and a third hours to form the third processed batch of porous ceramic particles. The third processed batch of porous ceramic particles had a mass of 4003 grams and a particle size distribution includes a Pd₁₀ = 530 µm, a Pd₅₀ = 562 µm and a Pd₉₀ = 596 µm. The processed particle size distribution span PPDS was equal to 0.12. The ratio IPDS/PPDS for the third cycle of the forming process was equal to 1.15.

Example 3: Three alternate two cycle processes having the same first cycle and according to an embodiment described herein were used to form example batches or ceramic particles that were then formed into catalyst carriers.

In cycle 1 of the process, seed particles of an amorphous silica material were used to form a first initial batch of ceramic particles, which had a mass of 950 grams. As measured by the CAMSIZER®, this first initial batch of ceramic particles had a particle size distribution including an Id₁₀ = 188 µm, an Id₅₀ = 209 µm, and an Id₉₀ = 235 µm. The initial particle size distribution span IPDS was equal to 0.23. The first initial batch of ceramic particles was loaded into a VFC-3 spray-fluidizer. These particles were fluidized with an airflow of 35 SCFM (991 lpm) at the beginning of the run and a temperature of nominally 100°C. This airflow was gradually increased over the course of the run to 43 SCFM (1217 lpm). A slip was sprayed onto this fluidized bed of particles. The slip consisted of 62 pounds of deionized water, 13.5 pounds of Grace-Davison C805 synthetic amorphous silica gel, 5.6 pounds of Nalco 1142 colloidal silica, 0.53 pounds of sodium hydroxide, and 1.3 pounds of DuPont Elvanol 51-05 polyvinyl alcohol. The slip had a pH of 10.1, a solids content of 21.8%, and was milled to a median particle size of 4.48 µm. The slip was atomized through a two-fluid nozzle, with an atomization air pressure of 30 psi. A mass of 7425 grams of slip was applied to the bed of particles over the course of two hours to form a first processed batch of porous ceramic particles. The first processed batch of porous ceramic particles had a mass of 2124 grams and a particle size distribution including a Pd₁₀ = 254 µm, a Pd₅₀ = 276 µm and a Pd₉₀ = 301 µm. The processed particle size distribution span PPDS was equal to 0.17. The ratio IPDS/PPDS for the first cycle of the forming process was equal to 1.32.

In a first cycle 2 iteration of the process, 2,500 grams of the first processed batch of porous ceramic particles (i.e., the product of cycle 1) were used to form a second initial batch of ceramic particles. The second initial batch of ceramic particles had a particle size distribution including an Id₁₀ = 254 µm, an Id₅₀ = 276 µm and an Id₉₀ = 301 µm, and the initial particle size distribution span IPDS was equal to 0.17. The second initial batch of ceramic particles were fluidized with a starting airflow of 43 SCFM (1217 lpm) and increased to 46 SCFM (1302 lpm) by the end of the run at a temperature of nominally 100°C. A slip of similar composition as the first cycle was sprayed onto the bed of seeds through the two-fluid nozzle, with an atomization air pressure of 30 psi. A mass of 14,834 grams of slip was applied to the second initial batch of ceramic particles over the course of three and one quarter hours to form the second processed batch of porous ceramic particles. The second processed batch of porous ceramic particles had a mass of 2849 grams and a particle size distribution includes a Pd₁₀ = 476 µm, a Pd₅₀ = 508 µm and a Pd₉₀ = 543 µm. The processed particle size distribution span PPDS was equal to 0.13. The ratio IPDS/PPDS for the second cycle of the forming process was equal to 1.29.

In a second cycle 2 iteration of the process, 2,500 grams of the first processed batch of porous ceramic particles (i.e., the product of cycle 1) were used to form a second initial batch of ceramic particles. The second initial batch of ceramic particles had a particle size distribution including an Id₁₀ = 254 µm, an Id₅₀ = 276 µm and an Id₉₀ = 301 µm, and the initial particle size distribution span IPDS was equal to 0.17. The second initial batch of ceramic particles were fluidized with a starting airflow of 43 SCFM (1217 lpm) and increased to 47 SCFM (1331 lpm) by the end of the run at a temperature that starts at 92°C and increases to 147°C by the end of the run. A slip of similar composition as the first cycle, but with a solids content of 19.7%, was sprayed onto the bed of seeds through the two-fluid nozzle, with an atomization air pressure of 35 psi. A mass of 16,931 grams of slip was applied to the second initial batch of ceramic particles over the course of three and one quarter hours to form the second processed batch of porous ceramic particles. The second processed batch of porous ceramic particles had a mass of 3384 grams and a particle size distribution includes a Pd₁₀ = 482 µm, a Pd₅₀ = 511 µm and a Pd₉₀ = 543 µm. The processed particle size distribution span PPDS was equal to 0.12. The ratio IPDS/PPDS for the second cycle of the forming process was equal to 1.43.

In a third cycle 2 iteration of the process, 2,500 grams of the first processed batch of porous ceramic particles (i.e., the product of cycle 1) were used to form a second initial batch of ceramic particles. The second initial batch of ceramic particles had a particle size distribution including an Id₁₀ = 254 µm, an Id₅₀ = 276 µm and an Id₉₀ = 301 µm, and the initial particle size distribution span IPDS was equal to 0.17. The second initial batch of ceramic particles were fluidized with a starting airflow of 43 SCFM (1217 lpm) and increased to 48 SCFM (1359 lpm) by the end of the run at a temperature that started at 92°C and increased to 147°C by the end of the run. A slip of similar composition as the first cycle, but with a solids content of 20.9%, was sprayed onto the bed of seeds through the two-fluid nozzle, with an atomization air pressure of 35 psi. A mass of 16,938 grams of slip was applied to the second initial batch of ceramic particles over the course of three and one quarter hours to form the second processed batch of porous ceramic particles. The second processed batch of porous ceramic particles had a mass of 3412 grams and a particle size distribution included a Pd₁₀ = 481 µm, a Pd₅₀ = 512 µm and a Pd₉₀ = 544 µm. The processed particle size distribution span PPDS was equal to 0.12. The ratio IPDS/PPDS for the second cycle of the forming process was equal to 1.38.

The greenware product from the three cycle 2 iterations were combined and fired in a rotary calciner at 650°C. This produced an amorphous silica (as determined by powder x-ray diffraction) catalyst carrier with a nitrogen BET surface area of 196 m²/gram, a mercury absorption pore volume of 1.34 cm³/gram, and a particle size distribution of D₁₀ = 468 µm, a D₅₀ = 499 µm, a D₉₀ = 531 µm, a span of 0.13, and a CAMSIZER® Shape Analysis Sphericity of 96.3%.

Example 4: A three cycle process according to an embodiment described herein was used to form an example batch of ceramic particles.

In cycle 1 of the process, seed particles of a zirconia material were used to form a first initial batch of ceramic particles, which had a mass of 247 grams. As measured by the CAMSIZER®, this first initial batch of ceramic particles had a particle size distribution including an Id₁₀ = 110 µm, an Id₅₀ = 135 µm, and an Id₉₀ = 170 µm. The initial particle size distribution span IPDS was equal to 0.44. The first initial batch of ceramic particles was loaded into a VFC-3 spray-fluidizer. These particles were fluidized with an airflow that starts at 34 SCFM (963 lpm) and increases to 40 SCFM (1133 lpm) by the end of the run, with a temperature that starts at 93°C and increases to 130°C by the end of the run. A slip consisting of a mixture of 29 pounds of deionized water, 7.5 pounds of Daiichi Kigenso Kagaku Kogyo RC-100 Zirconia powder, 0.3 pounds of concentrated nitric acid, 0.3 pounds of Sigma Aldrich polyethyleneimine, and 0.22 pounds of DuPont Elvanol 51-05 polyvinyl alcohol was prepared. The slip had a pH of 3.1, a solids content of 20.4%, and a median particle size of 2.92 µm. The slip was atomized through a two-fluid nozzle, with an atomization air pressure of 35 psi. A mass of 3487 grams of slip was applied to the bed of particles over the course of 1 hour to form a first processed batch of porous ceramic particles. The first processed batch of porous ceramic particles had a mass of 406 grams and a particle size distribution including a Pd₁₀ = 141 µm, a Pd₅₀ = 165 µm and a Pd₉₀ = 185 µm. The processed particle size distribution span PPDS was equal to 0.27. The ratio IPDS/PPDS for the first cycle of the forming process was equal to 1.67.

In cycle 2 of the process, 400 grams of first processed batch of porous ceramic particles (i.e., the product of cycle 1) were used to form a second initial batch of ceramic particles. The second initial batch of ceramic particles had a particle size distribution including an Id₁₀ = 141 µm, an Id₅₀ = 165 µm and an Id₉₀ = 185 µm, and the initial particle size distribution span IPDS was equal to 0.27. The second initial batch of ceramic particles was fluidized with a starting airflow of 40 SCFM (1133 lpm), increasing to 44 SCFM (1246 lpm) by the end of the run, and a temperature of nominally 130°C. A slip of similar composition as the first cycle was sprayed onto the bed of seeds through the two-fluid nozzle, with an atomization air pressure of 35 psi. A mass of 3410 grams of slip was applied to the second initial batch of ceramic particles over the course of 1 hour to form the second processed batch of porous ceramic particles. The second processed batch of porous ceramic particles had a mass of 644 grams and a particle size distribution included a Pd₁₀ =172 µm, a Pd₅₀ = 191 µm and a Pd₉₀ = 213 µm. The processed particle size distribution span PPDS was equal to 0.22. The ratio IPDS/PPDS for the second cycle of the forming process was equal to 1.24.

In cycle 3 of the process, 500 grams of the second processed batch of porous ceramic particles (i.e., the product of cycle 2) were used to form a third initial batch of ceramic particles. The third initial batch of ceramic particles had a particle size distribution including an Id₁₀ = 172 µm, an Id₅₀ = 191 µm and an id₉₀ = 213 µm, and the initial particle size distribution span IPDS was equal to 0.22. The third initial batch of ceramic particles was fluidized with a starting airflow of 45 SCFM (1275 lpm) and a temperature of nominally 130° C. A slip of similar composition as the first cycle was sprayed onto the bed of seeds through the two-fluid nozzle, with an atomization air pressure of 35 psi. A mass of 4,554 grams of slip was applied to the third initial batch of ceramic particles over the course of one hour to form the third processed batch of porous ceramic particles. The third processed batch of porous ceramic particles had a mass of 893 grams and a particle size distribution included a Pd₁₀ = 212 µm, a Pd₅₀ = 231 µm and a Pd₉₀ = 249 µm. The processed particle size distribution span PPDS was equal to 0.16. The ratio IPDS/PPDS for the third cycle of the forming process was equal to 1.34.

## Claims

1. A method for manufacturing a plurality of porous ceramic particles, said method comprising at least two batch spray fluidization forming cycles comprising a first cycle and a second cycle,
wherein the first cycle comprises:
preparing a first initial batch of ceramic particles having an average particle size of at least 100 microns and not greater than 2000 microns, and
forming the first initial batch into a first processed batch of porous ceramic particles using spray fluidization, wherein the first processed batch of porous ceramic particles has an average particle size (d₅₀) at least 10% greater than the average particle size (d₅₀) of the first initial batch of ceramic particles; and
wherein the second cycle comprises:
preparing a second initial batch of ceramic particles from the first processed batch of ceramic particles, and
forming the second initial batch into a second processed batch of porous ceramic particles using spray fluidization, wherein the second processed batch of porous ceramic particles has an average particle size (d₅₀) at least 10% greater than an average particle size (d₅₀) of the second initial batch of ceramic particles.

2. The method of claim 1, wherein the first initial batch of ceramic particles has an initial particle size distribution span IPDS equal to (Id₉₀-Id₁₀)/Id₅₀, where Id₉₀ is equal to a d₉₀ particle size distribution measurement of the initial batch of ceramic particles, Id₁₀ is equal to a d₁₀ particle size distribution measurement of the initial batch of ceramic particles and Id₅₀ is equal to a d₅₀ particle size distribution measurement of the initial batch of ceramic particles and the first processed batch of ceramic particles has a processed particle size distribution span PPDS equal to (Pd₉₀-Pd₁₀)/Pd₅₀, where Pd6₉₀ is equal to a d₉₀ particle size distribution measurement of the processed batch of porous ceramic particles, Pd₁₀ is equal to the d₁₀ particle size distribution measurement of the processed batch of porous ceramic particles and Pd₅₀ is equal to a d₅₀ particle size distribution measurement of the processed batch of porous ceramic particles; and
wherein the first batch spray fluidization forming cycle has a ratio IPDS/PPDS of at least 0.90.

3. The method of claim 2, wherein the second initial batch of ceramic particles has an initial particle size distribution span IPDS equal to (Id₉₀-Id₁₀)/Id₅₀, where Id₉₀ is equal to a d₉₀ particle size distribution measurement of the initial batch of ceramic particles, Id₁₀ is equal to a d₁₀ particle size distribution measurement of the initial batch of ceramic particles and Id₅₀ is equal to a d₅₀ particle size distribution measurement of the initial batch of ceramic particles and the second processed batch of ceramic particles has a processed particle size distribution span PPDS equal to (Pd₉₀-Pd₁₀)/Pd₅₀, where Pd₉₀ is equal to a d₉₀ particle size distribution measurement of the processed batch of porous ceramic particles, Pd₁₀ is equal to the d₁₀ particle size distribution measurement of the processed batch of porous ceramic particles and Pd₅₀ is equal to a d₅₀ particle size distribution measurement of the processed batch of porous ceramic particles; and
wherein the second batch spray fluidization forming cycle has a ratio IPDS/PPDS of at least 0.90.

4. The method of claim 1, wherein the process for forming the plurality of porous ceramic particles further comprises sintering the second processed batch of porous ceramic particles at a temperature of at least 350 °C and not greater than 1400°C.

5. The method of claim 1, wherein the plurality of porous ceramic particle further comprise a sphericity of at least 0.8 and not greater than 0.95.

6. The method of claim 2, wherein the IPDS of the first initial batch of ceramic particles is not greater than 2.00.

7. The method of claim 2, wherein the PPDS of the first processed batch of ceramic particles is not greater than 2.00.

8. The method of claim 1, wherein each ceramic particle of the plurality of ceramic particles comprises a cross-sectional structure including a core region and a layered region overlying the core region.

9. The method of claim 8 wherein the core region is monolithic.

10. The method of claim 8, wherein the layered region comprises overlapping layers surrounding the core region.

11. The method of claim 1, wherein spray fluidization comprises repeatedly dispensing finely dispersed droplets of a coating fluid onto air borne ceramic particles to form the processed batch of porous ceramic particles.

12. The method of claim 2 wherein the first batch spray fluidization forming cycle has a ratio IPDS/PPDS of at least 1.00.

13. The method of claim 12 wherein the first batch spray fluidization forming cycle has a ratio IPDS/PPDS of at least 1.05

14. The method of claim 3 wherein the second batch spray fluidization forming cycle has a ratio IPDS/PPDS of at least 1.00.

15. The method of claim 14 wherein the second batch spray fluidization forming cycle has a ratio IPDS/PPDS of at least 1.05.

## Patentansprüche

1. Verfahren zum Herstellen einer Vielzahl poröser Keramikpartikel, wobei das Verfahren mindestens zwei Chargen-Sprühfluidisierungsbildungszyklen umfasst, die einen ersten Zyklus und einen zweiten Zyklus umfassen,
wobei der erste Zyklus umfasst:
Herstellen einer ersten Anfangscharge von Keramikpartikeln, die eine durchschnittliche Partikelgröße von mindestens 100 Mikrometern und nicht mehr als 2000 Mikrometern aufweisen, und
Formen der ersten Anfangscharge zu einer ersten verarbeiteten Charge poröser Keramikpartikel unter Verwendung von Sprühfluidisierung, wobei die erste verarbeitete Charge poröser Keramikpartikel eine durchschnittliche Partikelgröße (d₅₀) aufweist, die mindestens 10 % größer als die durchschnittliche Partikelgröße (d₅₀) der ersten Anfangscharge von Keramikpartikeln ist; und
wobei der zweite Zyklus umfasst:
Herstellen einer zweiten Anfangscharge von Keramikpartikeln aus der ersten verarbeiteten Charge von Keramikpartikeln, und
Formen der zweiten Anfangscharge zu einer zweiten verarbeiteten Charge poröser Keramikpartikel unter Verwendung von Sprühfluidisierung, wobei die zweite verarbeitete Charge poröser Keramikpartikel eine durchschnittliche Partikelgröße (d₅₀) aufweist, die mindestens 10 % größer als eine durchschnittliche Partikelgröße (d₅₀) der zweiten Anfangscharge von Keramikpartikeln ist.

2. Verfahren nach Anspruch 1, wobei die erste Anfangscharge von Keramikpartikeln eine anfängliche Partikelgrößenverteilungsspanne (initial particle size distribution span, IPDS) gleich (Id₉₀-Id₁₀)/Id₅₀ aufweist, wobei Id₉₀ gleich einer d₉₀-Partikelgrößenverteilungsmessung der Anfangscharge von Keramikpartikeln ist, Id₁₀ gleich einer d₁₀-Partikelgrößenverteilungsmessung der Anfangscharge von Keramikpartikeln ist und Id₅₀ gleich einer dso-Partikelgrößenverteilungsmessung der Anfangscharge von Keramikpartikeln und die erste verarbeitete Charge von Keramikpartikeln eine Größenverteilungsspanne verarbeiteter Partikel gleich (Pd₉₀-Pd₁₀)/Pd₅₀, wobei Pd₉₀ gleich einer d₉₀-Partikelgrößenverteilungsmessung der verarbeiteten Charge poröser Keramikpartikel ist, Pd₁₀ gleich der d₁₀-Partikelgrößenerteilungsmessung der verarbeiteten Charge poröser Keramikpartikel ist und Pd₅₀ gleich einer dso-Partikelgrößenerteilungsmessung der verarbeiteten Charge poröser Keramikpartikel ist; und
wobei der erste Chargen-Sprühfluidisierungsbildungszyklus ein Verhältnis IPDS/PPDS von mindestens 0,90 aufweist.

3. Verfahren nach Anspruch 2, wobei die zweite Anfangscharge von Keramikpartikeln eine anfängliche Partikelgrößenverteilungsspanne (initial particle size distribution span, IPDS) gleich (Id₉₀-Id₁₀)/Id₅₀ aufweist, wobei Id₉₀ gleich einer d₉₀-Partikelgrößenverteilungsmessung der Anfangscharge von Keramikpartikeln ist, Id₁₀ gleich einer d₁₀-Partikelgrößenverteilungsmessung der Anfangscharge von Keramikpartikeln ist und Id₅₀ gleich einer dso-Partikelgrößenverteilungsmessung der Anfangscharge von Keramikpartikeln und die zweite verarbeitete Charge von Keramikpartikeln eine Größenverteilungsspanne verarbeiteter Partikel gleich (Pd₉₀-Pd₁₀)/Pd₅₀, wobei Pd₉₀ gleich einer d₉₀-Partikelgrößenverteilungsmessung der verarbeiteten Charge poröser Keramikpartikel ist, Pd₁₀ gleich der d₁₀-Partikelgrößenerteilungsmessung der verarbeiteten Charge poröser Keramikpartikel ist und Pd₅₀ gleich einer dso-Partikelgrößenerteilungsmessung der verarbeiteten Charge poröser Keramikpartikel ist; und
wobei der zweite Chargen-Sprühfluidisierungsbildungszyklus ein Verhältnis IPDS/PPDS von mindestens 0,90 aufweist.

4. Verfahren nach Anspruch 1, wobei das Verfahren zum Bilden der Vielzahl poröser Keramikpartikel ferner ein Sintern der zweiten verarbeiteten Charge poröser Keramikpartikel bei einer Temperatur von mindestens 350 °C und nicht mehr als 1400 °C umfasst.

5. Verfahren nach Anspruch 1, wobei die mehreren porösen Keramikpartikel ferner eine Kugeligkeit von mindestens 0,8 und nicht mehr als 0,95 aufweisen.

6. Verfahren nach Anspruch 2, wobei die IPDS der ersten Anfangscharge von Keramikpartikeln nicht größer als 2,00 ist.

7. Verfahren nach Anspruch 2, wobei die PPDS der ersten verarbeiteten Charge von Keramikpartikeln nicht größer als 2,00 ist.

8. Verfahren nach Anspruch 1, wobei jedes Keramikpartikel der Vielzahl von Keramikpartikeln eine Querschnittsstruktur umfasst, die einen Kernbereich und einen über dem Kernbereich liegenden Schichtbereich beinhaltet.

9. Verfahren nach Anspruch 8, wobei der Kernbereich monolithisch ist.

10. Verfahren nach Anspruch 8, wobei der Schichtbereich überlappende Schichten umfasst, die den Kernbereich umgeben.

11. Verfahren nach Anspruch 1, wobei die Sprühfluidisierung ein wiederholtes Verteilen von fein verteilten Tröpfchen eines Beschichtungsfluids auf luftgetragene Keramikpartikel umfasst, um die verarbeitete Charge poröser Keramikpartikel zu bilden.

12. Verfahren nach Anspruch 2, wobei der erste Chargen-Sprühfluidisierungsbildungszyklus ein Verhältnis IPDS/PPDS von mindestens 1,00 aufweist.

13. Verfahren nach Anspruch 12, wobei der erste Chargen-Sprühfluidisierungsbildungszyklus ein Verhältnis IPDS/PPDS von mindestens 1,05 aufweist

14. Verfahren nach Anspruch 3, wobei der zweite Chargen-Sprühfluidisierungsbildungszyklus ein Verhältnis IPDS/PPDS von mindestens 1,00 aufweist.

15. Verfahren nach Anspruch 14, wobei der zweite Chargen-Sprühfluidisierungsbildungszyklus ein Verhältnis IPDS/PPDS von mindestens 1,05 aufweist.

## Revendications

1. Procédé de fabrication d'une pluralité de particules céramiques poreuses, ledit procédé comprenant au moins deux cycles de formation de fluidisation par pulvérisation discontinue comprenant un premier cycle et un second cycle,
dans lequel le premier cycle comprend :
préparer un premier lot initial de particules céramiques ayant une granulométrie moyenne d'au moins 100 microns et non supérieure à 2000 microns, et
former le premier lot initial en un premier lot traité de particules céramiques poreuses en utilisant la fluidisation par pulvérisation, dans lequel le premier lot traité de particules céramiques poreuses a une granulométrie moyenne (d₅₀) au moins 10% supérieure à la granulométrie moyenne (d₅₀) du premier lot initial de particules céramiques ; et
dans lequel le second cycle comprend :
préparer un second lot initial de particules céramiques à partir du premier lot traité de particules céramiques, et
former le second lot initial en un second lot traité de particules céramiques poreuses en utilisant la fluidisation par pulvérisation, dans lequel le second lot traité de particules céramiques poreuses a une granulométrie moyenne (d₅₀) au moins 10% supérieure à une granulométrie moyenne (d₅₀) du second lot initial de particules céramiques.

2. Procédé selon la revendication 1, dans lequel le premier lot initial de particules céramiques a une plage de distribution granulométrique initiale IPDS égale à (Id₉₀-Id₁₀)/Id₅₀, où Id₉₀ est égale à une mesure de distribution granulométrique d₉₀ du lot initial de particules céramiques, Id₁₀ est égale à une mesure de la distribution granulométrique ad₁₀ du lot initial de particules céramiques et Id₅₀ est égale à une mesure de la distribution granulométrique ad₅₀ du lot initial de particules céramiques et le premier lot traité de particules céramiques a une plage de distribution granulométrique traitées PPDS égale à (Pd₉₀-Pd₁₀)/Pd₅₀, où Pd₉₀ est égale à une mesure de la distribution granulométrique ad₉₀ du lot traité de particules céramiques poreuses, Pd₁₀ est égale à une mesure de la distribution granulométrique d₁₀ du lot traité de particules céramiques poreuses et Pd₅₀ est égale à une mesure de la distribution granulométrique ad₅₀ du lot traité de particules céramiques poreuses ; et
dans lequel le premier cycle de formation de fluidisation par pulvérisation discontinue a un rapport IPDS/PPDS d'au moins 0,90.

3. Procédé selon la revendication 2, dans lequel le second lot initial de particules céramiques a une plage de distribution granulométrique initiale IPDS égale à (Id₉₀-Id₁₀)/Id₅₀, où Id₉₀ est égale à une mesure de distribution granulométrique ad₉₀ du lot initial de particules céramiques, Id₁₀ est égale à une mesure de la distribution granulométrique ad₁₀ du lot initial de particules céramiques et Id₅₀ est égale à une mesure de la distribution granulométrique ad₅₀ du lot initial de particules céramiques et le second lot traité de particules céramiques a une plage de distribution granulométrique traitée PPDS égale à (Pd₉₀-Pd₁₀)/Pd₅₀, où Pd₉₀ est égale à une mesure de la distribution granulométrique ad₉₀ du lot traité de particules céramiques poreuses, Pd₁₀ est égale à une mesure de la distribution granulométrique d₁₀ du lot traité de particules céramiques poreuses et Pd₅₀ est égale à une mesure de la distribution granulométrique ad₅₀ du lot traité de particules céramiques poreuses ; et
dans lequel le second cycle de formation de fluidisation par pulvérisation discontinue a un rapport IPDS/PPDS d'au moins 0,90.

4. Procédé selon la revendication 1, dans lequel le procédé de formation de la pluralité de particules céramiques poreuses comprend en outre le frittage du second lot traité de particules céramiques poreuses à une température d'au moins 350 °C et non supérieure à 1400 °C.

5. Procédé selon la revendication 1, dans lequel la pluralité de particules céramiques poreuses comprend en outre une sphéricité d'au moins 0,8 et non supérieure à 0,95.

6. Procédé selon la revendication 2, dans lequel l'IPDS du premier lot initial de particules céramiques n'est pas supérieur à 2,00.

7. Procédé selon la revendication 2, dans lequel le PPDS du premier lot traité de particules céramiques n'est pas supérieur à 2,00.

8. Procédé selon la revendication 1, dans lequel chaque particule céramique de la pluralité de particules céramiques comprend une structure en coupe transversale comprenant une région centrale et une région en couches recouvrant la région centrale.

9. Procédé selon la revendication 8, dans lequel la région centrale est monolithique.

10. Procédé selon la revendication 8, dans lequel la région en couches comprend des couches se chevauchant entourant la région centrale.

11. Procédé selon la revendication 1, dans lequel la fluidisation par pulvérisation comprend la distribution répétée de gouttelettes finement dispersées d'un fluide de revêtement sur des particules céramiques en suspension dans l'air pour former le lot traité de particules céramiques poreuses.

12. Procédé selon la revendication 2, dans lequel le premier cycle de formation de fluidisation par pulvérisation discontinue a un rapport IPDS/PPDS d'au moins 1,00.

13. Procédé selon la revendication 12, dans lequel le premier cycle de formation de fluidisation par pulvérisation discontinue a un rapport IPDS/PPDS d'au moins 1,05.

14. Procédé selon la revendication 3, dans lequel le second cycle de formation de fluidisation par pulvérisation discontinue a un rapport IPDS/PPDS d'au moins 1,00.

15. Procédé selon la revendication 14, dans lequel le second cycle de formation de fluidisation par pulvérisation discontinue a un rapport IPDS/PPDS d'au moins 1,05.
